# EUROPEAN PATENT APPLICATION

(11) **EP 3 043 051 A1**
(43) Date of publication of application: **13.07.2016**
(21) Application number: 16150239.8
(22) Date of filing: 05.01.2016
(51) Int. Cl.: F02D 41/00, F02B 37/00, G01M 15/12

(54) **SENSOR FOR DETERMINING ENGINE CHARACTERISTICS**

(30) Priority: 08.01.2015 US 201514592547
(71) Applicant: General Electric Company, Schenectady, NY 12345 (US)
(72) Inventor: BIZUB, Jeffrey Jacob, Waukesha, WI Wisconsin 53188 (US)
(74) Representative: Williams, Andrew Richard

(57) **Abstract**

A system (8) includes a turbocharger (17) and at least one sensor (23) disposed adjacent the turbocharger. The at least one sensor (23) is configured to detect one or more resonance frequencies of the turbocharger. The system (8) also includes a controller (25) configured to receive a signal from the at least one sensor representative of the detected one or more resonance frequencies of the turbocharger (17) and to analyze the one or more resonance frequencies to determine one or more characteristics of the turbocharger.

## Description

### BACKGROUND

The subject matter disclosed herein relates to sensors for determining characteristics of turbochargers within combustion engines.

Combustion engines, such as rotary engines and turbine engines, combust fuel to generate motion (e.g., rotary motion) of certain interior components within the engine which is then typically used to power a drive train, a generator, or other useful system. Combustion engines typically combust a carbonaceous fuel, such as natural gas, gasoline, diesel, and the like, and use the corresponding expansion of high temperature and pressure gases to apply a force to certain components of the engine, e.g., piston disposed in a cylinder, to move the components over a distance. Each cylinder may include one or more valves that open and close correlative with combustion of the carbonaceous fuel. For example, an intake valve may direct an oxidant such as air into the cylinder, which is then mixed with fuel and combusted. Combustion fluids, e.g., hot gases, may then be directed to exit the cylinder via an exhaust valve. The engine may include a turbocharger to increase the pressure and/or quantity of air that combines with the fuel within the cylinder. The turbocharger may work by rotating two sides of a rotor. The first receives pressure from exhaust gas which rotates blades of the turbocharger. The other side of the turbocharger also has blades that spin and force additional oxidant into the cylinder of the engine. Accordingly, the carbonaceous fuel is transformed into mechanical motion, useful in driving a load. For example, the load may be a generator that produces electric power.

### BRIEF DESCRIPTION

Certain examples commensurate in scope with the originally claimed invention are summarized below. These examples are not intended to limit the scope of the claimed invention, but rather are intended only to provide a brief summary of possible forms of the invention. Indeed, the invention may encompass a variety of forms that may be similar to or different from the examples set forth below.

In a first aspect, a system includes a turbocharger and at least one sensor disposed adjacent the turbocharger. The at least one sensor is configured to detect one or more resonance frequencies of the turbocharger. The system also includes a controller configured to receive a signal from the at least one sensor representative of the detected one or more resonance frequencies of the turbocharger and to analyze the one or more resonance frequencies to determine one or more characteristics of the turbocharger.

In a second aspect, a system includes a controller configured to receive a signal from at least one sensor disposed adjacent a turbocharger, sample the signal to produce a sampled signal, filter the sampled signal to detect one or more resonance frequencies to the turbocharger, and analyze the resonance frequencies to determine one or more characteristics of the turbocharger.

In a third aspect, a method includes receiving a signal from a sensor disposed adjacent a turbocharger, sampling the signal to produce a sampled signal, filtering the sampled signal to detect one or more resonance frequencies to the turbocharger, and analyzing the resonance frequencies to determine one or more characteristics of the turbocharger.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a block diagram of an embodiment of a portion of an engine driven power generation system in accordance with aspects of the present disclosure;
FIG. 2 is a side cross-sectional view of an embodiment of a piston assembly within a cylinder of the reciprocating engine shown in FIG. 1 in accordance with aspects of the present disclosure;
FIG. 3 is a perspective view of an embodiment of a sensor disposed near the cylinder and the turbocharger of FIG. 1 in accordance with aspects of the present disclosure;
FIG. 4 is a spectrogram view of data sent by the sensor of FIGS. 2 and 3 in accordance with aspects of the present disclosure; and
FIG. 5 is a flowchart of an embodiment of a process to operate the controller of FIG. 1 to detect the speed of a turbocharger in accordance with aspects of the present disclosure.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

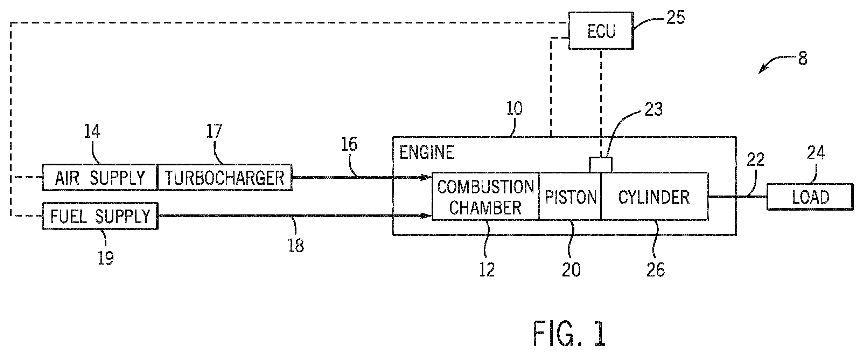

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). An air supply 14 is configured to provide a pressurized oxidant 16, such as air, oxygen, oxygen-enriched air, oxygen-reduced air, or any combination thereof, to each combustion chamber 12. The oxidant 16 may be pressurized by a turbocharger 17 that receives force from the engine 10 and uses it to increase the pressure of the oxidant 16 as it enters the combustion chamber 12. The turbocharger 17 may receive the force from the engine 10 in the form of exhaust gas. For example, the turbocharger 17 may include a compressor having blades that are disposed around a rotor. The blades, in certain embodiments, may be driven by exhaust gas to rotate. The rotation of the blades and the rotor may drive a load on another end of the rotor. The load, for example, may include additional blades that force air/oxidant into the combustion chamber 12. The speed of rotation of the turbocharger 17 should correlate to an amount of oxidant 16 entering the combustion chamber 12. It may be useful to know the speed of the turbocharger 17 during operation, as a diagnostic tool and/or during start-up and shut-down so the amount of oxidant 16 entering the combustion chamber 12 may be accurately determined.

The combustion chamber 12 is also configured to receive a fuel 18 (e.g., a liquid and/or gaseous fuel) from a fuel supply 19, and a fuel-air mixture ignites and combusts within each combustion chamber 12. The hot pressurized combustion gases cause a piston 20 adjacent to each combustion chamber 12 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. The system 10 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

The driven power generation system 8 may include one or more knock sensors 23 suitable for detecting engine "knock." The knock sensor 23 may be any sensor configured to sense vibrations caused by the engine 10, such as vibration due to detonation, pre-ignition, and or pinging. The knock sensor 23 is shown communicatively coupled to an engine control unit (ECU) 25. During operations, signals from the knock sensor 23 are communicated to the ECU 25 to determine if knocking conditions (e.g., pinging) exist. Additionally, the knock sensor 23 may detect vibrations from the turbocharger 17 that indicate certain characteristics of the engine 10 and/or the turbocharger 17. The ECU 25 may then adjust certain engine 10 parameters to ameliorate or eliminate the conditions of the engine 10 and/or the turbocharger 17. For example, the ECU 25 may adjust ignition timing and/or adjust boost pressure to eliminate the knocking. As further described herein, the knock sensor 23 may additionally derive that certain vibrations should be further analyzed and categorized to detect, for example, speed of a turbocharger.

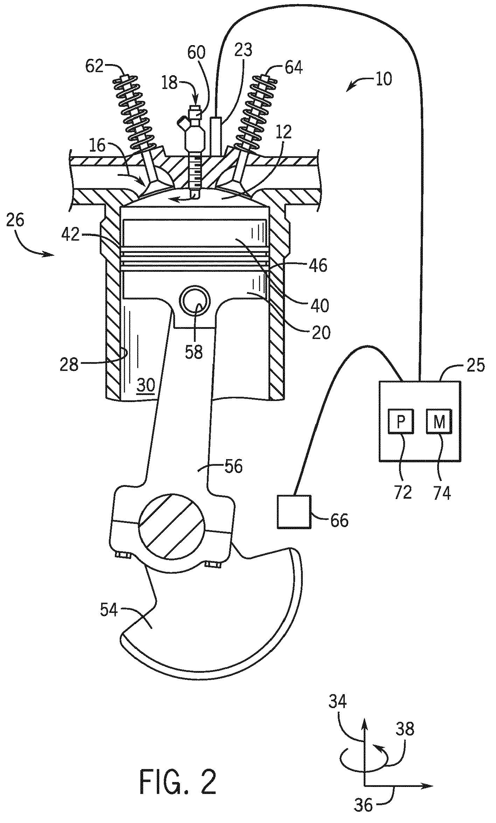

FIG. 2 is a side cross-sectional view of an embodiment of a piston assembly having a piston 20 disposed within a cylinder 26 (e.g., an engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., a top land). The top portion 40 generally blocks the fuel 18 and the air 16, or a fuel-air mixture 32, from escaping from the combustion chamber 12 during reciprocating motion of the piston 20.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. As shown, the combustion chamber 12 is positioned adjacent to the top land 40 of the piston 24. A fuel injector 60 provides the fuel 18 to the combustion chamber 12, and an intake valve 62 controls the delivery of air 16 to the combustion chamber 12. An exhaust valve 64 controls discharge of exhaust from the engine 10. The exhaust from the engine 10 may flow to the turbocharger 17 which rotates a turbine that forces air toward the intake valve 62. The turbocharger 17 thus increases the air pressure which increases the amount of oxidant 16 within the combustion chamber 12, which in turn may increase power and/or efficiency of the engine 10. When the engine 10 stops, and quits discharging exhaust, the turbocharger 17 will spool down as well and eventually stop forcing oxidant 16 toward the intake valve 62. Spooling down is not immediate, however, and some air 16 may continue to be forced toward the intake valve 62. By the same token, spooling up to speed is not immediate. Thus, knowing the speed of the turbocharger 17 can be very helpful during operation of the engine 10 when the amount of air 16 being forced into the intake valve 62 by the turbocharger 17 would otherwise be unknown.

Referring back to FIG. 2, in certain embodiments the fuel injector 18 may adjust the amount of fuel 18 injected into the combustion chamber 12 based on oxidant ratios, temperature, humidity, or other factors. However, it should be understood that any suitable elements and/or techniques for providing fuel 18 to the combustion chamber 12 and/or for discharging exhaust may be utilized, and in some embodiments, no fuel injection is used. In operation, combustion of the fuel 18 with the air 16 in the combustion chamber 12 cause the piston 20 to move in a reciprocating manner (e.g., back and forth) in the axial direction 34 within the cavity 30 of the cylinder 26.

During operations, when the piston 20 is at the highest point in the cylinder 26 it is in a position called top dead center (TDC). When the piston 20 is at its lowest point in the cylinder 26, it is in a position called bottom dead center (BDC). As the piston 20 moves from top to bottom or from bottom to top, the crankshaft 54 rotates one half of a revolution. Each movement of the piston 20 from top to bottom or from bottom to top is called a stroke, and engine 10 embodiments may include two-stroke engines, three-stroke engines, four-stroke engines, five-stroke engine, six-stroke engines, or more.

During engine 10 operations, a sequence including an intake process, a compression process, a power process, and an exhaust process typically occurs. The intake process enables a combustible mixture, such as fuel and air, to be pulled into the cylinder 26, thus the intake valve 62 is open and the exhaust valve 64 is closed. The compression process compresses the combustible mixture into a smaller space, so both the intake valve 62 and the exhaust valve 64 are closed. The power process ignites the compressed fuel-air mixture, which may include a spark ignition through a spark plug system, and/or a compression ignition through compression heat. The resulting pressure from combustion then forces the piston 20 to BDC. The exhaust process typically returns the piston 20 to TDC while keeping the exhaust valve 64 open. The exhaust process thus expels the spent fuel-air mixture through the exhaust valve 64. It is to be noted that more than one intake valve 62 and exhaust valve 64 may be used per cylinder 26.

The depicted engine 10 also includes a crankshaft sensor 66, the knock sensor 23, and the engine control unit (ECU) 25, which includes a processor 72 and memory 74. The crankshaft sensor 66 senses the position and/or rotational speed of the crankshaft 54. Accordingly, a crank angle or crank timing information may be derived. That is, when monitoring combustion engines, timing is frequently expressed in terms of crankshaft 54 angle. For example, a full cycle of a four stroke engine 10 may be measured as a 720° cycle. The knock sensor 23 may be a Piezo-electric accelerometer, a microelectromechanical system (MEMS) sensor, a Hall effect sensor, a magnetostrictive sensor, and/or any other sensor designed to sense vibration, acceleration, sound, and/or movement. In other embodiments, sensor 23 may not be a knock sensor in the traditional sense, but any sensor that may sense vibration, pressure, acceleration, deflection, or movement.

Because of the percussive nature of the engine 10, the knock sensor 23 may be capable of detecting signatures even when mounted on the exterior of the cylinder 26. However, the knock sensor 23 may be disposed at various locations in or about the cylinder 26. Additionally, in some embodiments, a single knock sensor 23 may be shared, for example, with one or more adjacent cylinders 26, or between a cylinder 26 and the turbocharger 17. In other embodiments, each cylinder 26 and the turbocharger 17 may include one or more knock sensors 23. The crankshaft sensor 66 and the knock sensor 23 are shown in electronic communication with the engine control unit (ECU) 25. The ECU 25 includes a processor 72 and a memory 74. The memory 74 may store computer instructions that may be executed by the processor 72. The ECU 25 monitors and controls and operation of the engine 10, for example, by adjusting combustion timing, valve 62, 64, timing, adjusting the delivery of fuel and oxidant (e.g., air), and so on.

Advantageously, the techniques described herein may use the ECU 25 to receive data from the crankshaft sensor 66 and the knock sensor 23, and then to creates a "noise" signature by plotting the knock sensor 23 data against the crankshaft 54 position. The ECU 25 may then go through the process of analyzing the data to derive normal (e.g.., known and expected noises) and abnormal signatures (e.g., unknown or unexpected noises). The ECU 25 may then characterize the abnormal signatures, as described in more detail below. These signatures may be compiled into a lookup table that may be stored on the memory 74 for later use during operation of the engine 10. For example, the exact engine 10 may be tested prior to installation into within the system 8 and the signatures saved during such testing. Additionally, the lookup table may be supplied by testing engines 10 of the same model. That is, by storing and compiling operation data from one or more engines 10 of the same type (e.g., make, model, version, etc.), an accurate signature may be stored for a newly installed engine 10. By providing for signature analysis, the techniques described herein may enable a more optimal and a more efficient operations and maintenance of the engine 10.

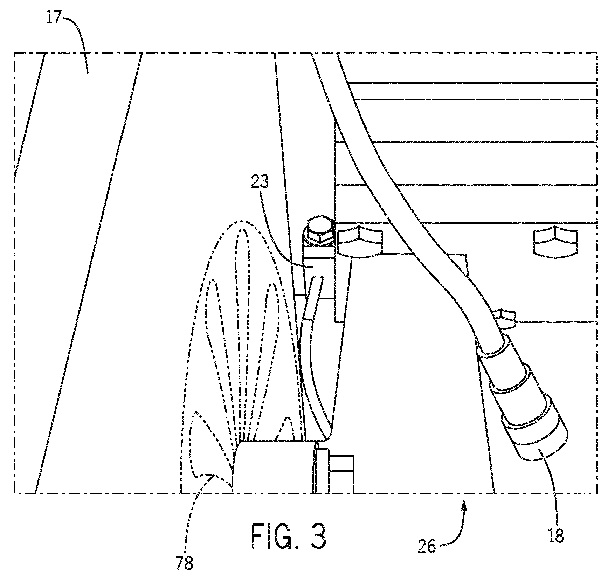

FIG. 3 is a perspective view of an embodiment of a sensor 23 disposed near the cylinder 26 and the turbocharger 17 of FIG. 1. The cylinder 26 includes the combustion chamber 12 and other components as described above and shown in FIG. 2. The cylinder 26 discharges exhaust which travels toward the turbocharger 17. In the illustrated embodiment, the turbocharger 17 includes blades 78 that receive the exhaust and convert it to a rotary motion. The rotary motion powers an additional set of blades that drives the oxidant 16 into the cylinder 26, as described above. The sensor 23, in the illustrated embodiment, is coupled to the engine 10 in a location close to the cylinder 26 and close to the turbocharger 17 to pick up vibrations and/or sound waves that may be generated. The sensor 23 may be coupled to the engine 10, the cylinder 26, or the turbocharger 17 by semi-rigid or rigid mount. A semi-rigid mount may include vibration insulating material between the sensor 23 and the engine 10. This may allow the sensor 23 to pick up slightly different signatures from the rigid mount and/or may protect the sensor 23 or the engine 10 from wear and tear associated with operating the engine 10.

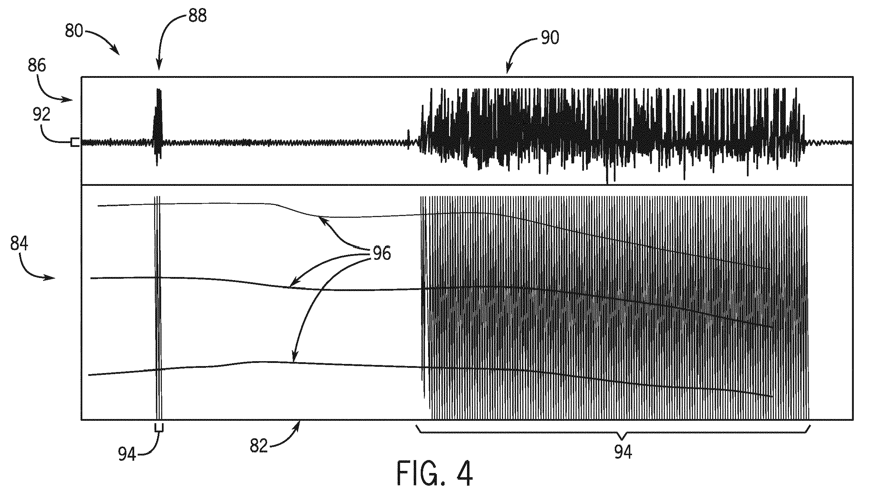

FIG. 4 is a spectrogram 80 view of data sent by the sensor 23 of FIG. 3. In the illustrated embodiment, the abscissa shows the relative time 82 of operation for the signals as detected by the sensor 23. The ordinate shows two simultaneous signals of information detected by the sensor 23. The bottom of the spectrogram 80 shows the sound frequency 84 detected by the sensor 23. The top of the spectrogram 80 shows the amplitude 86 of the sound/vibrations detected by the sensor 23. While the amplitude varies slightly over time, a few overall trends are apparent. For example, the amplitude 86 of the spectrogram 80 shows two knock events (i.e., first knock event 88 and second knock event 90) detected when knocking within the cylinder 26 produces unusually high vibration and/or sound waves over the baseline sound 92 of usual operation of the engine 10. The frequency 84 of the knock signals 88, 90 is also quite broad, as evidenced by the bands 94 of broad detected frequency apparent during the knock events 88, 90. Also apparent in the frequency graph 84 are three lines of fairly consistent vibration detected by the sensor 23. The three lines correlate to resonance frequencies 96 of the turbocharger 17 as it spins during operation of the engine 10. The resonance frequencies 96 are fairly independent of the knock condition within the cylinder 26 as evidenced by the maintaining of the resonance frequency during the first knock event 88.

During the second knock event 90 in the illustrated embodiment, the engine 10 begins to discharge less exhaust and the resonance frequencies 96 also drop. The drop in frequency 84 corresponds to a drop in the speed of the turbocharger 17 and a drop in air 16 being forced into the cylinder 26. The spectrogram 80 thus shows that the sensor 23 may detect knock events (e.g., 88, 90) and resonance frequencies 96 of a turbocharger 17 simultaneously. Furthermore, the sensor 23 does not have to detect a knock event to detect resonance frequencies 96. Therefore, the sensor 23 may send only the resonance frequency 96 information to the ECU 25 in order to determine the speed of the turbocharger 17.

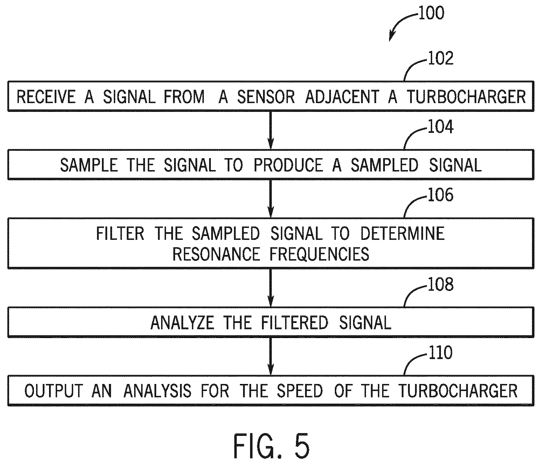

FIG. 5 is a flowchart of an embodiment of a process 100 to operate the ECU 25 of FIG. 1 to detect the speed of the turbocharger 17. The process 100 begins with the ECU 25 receiving 102 a signal from the sensor 23. The signal may be the frequency and amplitude signal shown in the spectrogram 80 of FIG. 4. The signal may also include information recorded from multiple sensors 23 from one or more locations around the engine 10. For example, the sensors 23 may be disposed adjacent the turbocharger 17, or may be coupled to the engine 10 a small distance away from the turbocharger 17, or may be coupled to one or more cylinders 26. In some embodiments, due to the rigid structure of the engine 10, the vibration and sound signals generated by the turbocharger 17 may travel through the engine 10 and be detected 10, 20, 30, 40, or 50 centimeters away from the turbocharger 17. The sensor 23 may thus be disposed rigidly or semi-rigidly up to approximately 50 centimeters from the turbocharger 17.

Next in the process 100, the ECU 25 samples 104 the signal to produce a sampled signal. The ECU 25 may have a sample rate that varies in response to engine 10 conditions. For example, during startup of the engine 10, the ECU 25 may sample at a faster rate to improve accuracy of the sample signal. On the other hand, during continuous operation of the engine 10, the ECU 25 may sample the signal at a slower rate, because the signal is more likely to be the same over a longer period of time. The signal is likely to be the same due to the constant speed at which the turbocharger 17 is expected to be rotating. During shutdown of the engine 10, the turbocharger 17 is likely to be changing speed, and therefore the sampling rate may be increased.

The process 100 also involves filtering 106 the sampled signal to detect one or more resonance frequencies of the turbocharger 17. Filtering the sampled signal may involve removing frequencies that are known to be generated by the engine 10 and not the turbocharger 17. For example, certain embodiments of the engine 10 may operate with a vibration frequency of 375 Hz. By using a low-pass filter of 375 Hz, the sampled signal may more accurately reflect the frequencies that are being produced by the turbocharger 17. The filtered frequencies may indicate the speed or other characteristics of the turbocharger 17, and therefore the ECU 25 may analyze 108 the resonance frequencies to determine one or more characteristics of the turbocharger 17. Analyzing may involve comparing the filtered frequencies to frequencies stored in a lookup table, as outlined above. The lookup table may be stored within the memory of the ECU 25 based on previous testing of the engine 10, or by testing or modeling of similar engines 10. After the results are analyzed, the ECU 25 outputs 110 an analysis for the speed of the turbocharger 17. The analysis may trigger the engine 10 to adjust operating parameters such as timing and fuel injection to compensate for any changes from the turbocharger 17.

Beneficial effects of the invention include increasing efficiency of engines 10 that include a turbocharger 17. The ECU 25 disclosed herein receives signals from one or more sensors 23 that indicate conditions and operating parameters of the turbocharger 17. The engine 10 may then efficiently react to the conditions and operating parameters to reduce pinging and fuel consumption, and increase the useful life to the engine 10 and engine components.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A system, comprising:
   a turbocharger;
   at least one sensor disposed adjacent the turbocharger, wherein the at least one sensor is configured to detect one or more resonance frequencies of the turbocharger; and
   a controller configured to receive a signal from the at least one sensor representative of the detected one or more resonance frequencies of the turbocharger and to analyze the one or more resonance frequencies to determine one or more characteristics of the turbocharger.
2. The system of clause 1, wherein the at least one sensor comprises a vibration sensor.
3. The system of any preceding clause, wherein the at least one sensor comprises a knock sensor.
4. The system of any preceding clause, wherein the turbocharger comprises a plurality of blades, and the one or more characteristics comprise an imbalance in the plurality of blades.
5. The system of any preceding clause, wherein the turbocharger comprises a plurality of blades, and the one or more characteristics comprise a turbo speed of the plurality of blades.
6. The system of any preceding clause, wherein the sensor is configured to detect a plurality of resonance frequencies of the turbocharger, and the controller is configured to analyze a plurality of resonance frequencies to determine the turbo speed of the plurality of blades.
7. The system of any preceding clause, wherein the controller is configured to utilize a look up table to determine the turbo speed of the plurality of blades based on one or more resonance frequencies of the turbocharger.
8. The system of any preceding clause, comprising a semi-rigid or rigid mount coupled to the turbocharger, and the at least one sensor is disposed on the semi-rigid or rigid mount.
9. The system of any preceding clause, wherein the at least one sensor is disposed on the turbocharger.
10. The system of any preceding clause, wherein the at least one sensor is disposed within a distance of approximately 50 centimeters or less of the turbocharger.
11. The system of any preceding clause, wherein the controller is configured to low pass filter the signal prior to analyzing the one or more resonance frequencies to determine one or more characteristics of the turbocharger.
12. The system of any preceding clause, comprising a combustion engine, and the turbocharger is coupled to the combustion engine.
13. A system, comprising:
   a controller configured to:
      receive a signal from at least one sensor disposed adjacent a turbocharger;
      sample the signal to produce a sampled signal;
      filter the sampled signal to detect one or more resonance frequencies to the turbocharger; and
      analyze the resonance frequencies to determine one or more characteristics of the turbocharger.
14. The system of any preceding clause, wherein the at least one sensor comprises a knock sensor.
15. The system of any preceding clause, wherein the controller is configured to utilize a look up table to analyze the one or more resonance frequencies of the turbocharger.
16. The system of any preceding clause, wherein the controller is configured to low pass filter the signal prior to analyzing the one or more resonance frequencies to determine one or more characteristics of the turbocharger.
17. A method, comprising:
   receiving a signal from a sensor disposed adjacent a turbocharger;
   sampling the signal to produce a sampled signal;
   filtering the sampled signal to detect one or more resonance frequencies of the turbocharger; and
   analyzing the resonance frequencies to determine one or more characteristics of the turbocharger.
18. The method of any preceding clause, wherein filtering the sampled signal comprises low-pass filtering the sampled signal prior to analyzing the one or more resonance frequencies to determine one or more characteristics of the turbocharger.
19. The method of any preceding clause, wherein sampling comprises a sampling rate that is higher when the turbocharger is expected to change the speed of rotation.
20. The method of any preceding clause, wherein analyzing the resonance frequencies comprises comparing the resonance frequencies to values in a lookup table.

## Claims

1. A system (8), comprising:
a turbocharger (17);
at least one sensor (23) disposed adjacent the turbocharger (17), wherein the at least one sensor is configured to detect one or more resonance frequencies of the turbocharger; and
a controller (25) configured to receive a signal from the at least one sensor (23) representative of the detected one or more resonance frequencies of the turbocharger (17) and to analyze the one or more resonance frequencies to determine one or more characteristics of the turbocharger.

2. The system (8) of claim 1, wherein the at least one sensor (23) comprises a vibration sensor.

3. The system (8) of either of claim 1 or 2, wherein the at least one sensor (23) comprises a knock sensor.

4. The system (8) of any preceding claim, wherein the turbocharger (17) comprises a plurality of blades, and the one or more characteristics comprise an imbalance in the plurality of blades.

5. The system (8) of any preceding claim, wherein the turbocharger (17) comprises a plurality of blades, and the one or more characteristics comprise a turbo speed of the plurality of blades.

6. The system (8) of claim 5, wherein the sensor (23) is configured to detect a plurality of resonance frequencies of the turbocharger (17), and the controller (25) is configured to analyze a plurality of resonance frequencies to determine the turbo speed of the plurality of blades.

7. The system (8) of either of claim 5 or 6, wherein the controller (25) is configured to utilize a look up table to determine the turbo speed of the plurality of blades based on one or more resonance frequencies of the turbocharger (17).

8. The system (8) of any preceding claim, comprising a semi-rigid or rigid mount coupled to the turbocharger, and the at least one sensor (23) is disposed on the semi-rigid or rigid mount.

9. The system (8) of any preceding claim, wherein the at least one sensor (23) is disposed on the turbocharger.

10. The system (8) of any preceding claim, wherein the at least one sensor (23) is disposed within a distance of approximately 50 centimeters or less of the turbocharger (17).

11. The system (8) of any preceding claim, wherein the controller (25) is configured to low pass filter the signal prior to analyzing the one or more resonance frequencies to determine one or more characteristics of the turbocharger (17).

12. A system (8), comprising:
a controller (25) configured to:
receive a signal from at least one sensor (23) disposed adjacent a turbocharger (17);
sample the signal to produce a sampled signal;
filter the sampled signal to detect one or more resonance frequencies to the turbocharger; and
analyze the resonance frequencies to determine one or more characteristics of the turbocharger (17).

13. A method, comprising:
receiving a signal from a sensor (23) disposed adjacent a turbocharger (17);
sampling the signal to produce a sampled signal;
filtering the sampled signal to detect one or more resonance frequencies of the turbocharger (17); and
analyzing the resonance frequencies to determine one or more characteristics of the turbocharger (17).

14. The method of claim 13, wherein filtering the sampled signal comprises low-pass filtering the sampled signal prior to analyzing the one or more resonance frequencies to determine one or more characteristics of the turbocharger (17).

15. The method of either of claim 13 or 14, wherein sampling comprises a sampling rate that is higher when the turbocharger (17) is expected to change the speed of rotation.
